# EUROPEAN PATENT SPECIFICATION

(11) **EP 0 459 139 B1**
(45) Date of publication and mention of the grant of the patent: **06.12.1995**
(21) Application number: 91106548.0
(22) Date of filing: 23.04.1991
(51) Int. Cl.: F16B 7/04, F16B 19/00

(54) **Post connector**
Verbinder für Pfosten
Connecteur pour montant

(30) Priority: 23.05.1990 US 527387; 27.03.1991 US 674478
(43) Date of publication of application: 04.12.1991
(73) Proprietor: InterMetro Industries Corporation, Wilkes-Barre Pennsylvania 18705 (US)
(72) Inventor: Kolvites, Albert, Mountaintop, Pennsylvania 18701 (US); Welsch, John H., Moscow, Pennsylvania 18444 (US)
(74) Representative: Schmidt-Evers, Jürgen, Dipl.-Ing.

(56) References cited:
- GB-A- 974 115
- GB-A- 2 147 680

## Description

### Field of the Invention

This invention relates to post a connector device, and particularly, to a connector that quickly, reliably, and invisibly connects first and second hollow posts.

### Description of the Prior Art

Many products now on the market include hollow load-bearing posts, such as shelving, and the like. The transportation of such products has often been unwieldy and expensive due to the extensive length of the support posts. Shipping such posts in smaller segments would be advantageous, except for the difficulty of quickly and easily assembling the posts such that they retain the load-bearing capabilities of a unitary structure. Further, many of the known devices for coupling post segments together include structure on the outside of the posts, thus displaying an unsightly connection, and providing an element that may interfere with the operation of the post itself. For example, shelving systems are known wherein the shelves are vertically adjustable with respect to a plurality of posts. Any coupling structure attached to the outside of such posts would make the vertical adjustment of the shelves difficult or impossible.

Connecting post segments together with structure inside the segments often requires wedges, clamps, screws, or other hardware that in turn require extensive manipulations for assembly. In addition, such interior structures may be mislocated relative to the joint between two post segments, thus inviting mechanical failure of the post itself or at the joint.

Connectors having a centrally located circumferential rib on their outer surface are also known. The rib prevents the connector from being inserted too far into either of the post segments coupled together. However, such a rib is visible when the assembly is complete. Such arrangement is also less than satisfactory in applications that require highly sanitary conditions.

GB-A-974115 discloses a device for connecting two tubular-like elements to one another comprising a radially expansible tubular member formed of sheet metal and of such cross-section as to fit into the ends of the elements to be connected, parts of the wall of the tubular member being cut and bent to provide a first set of resilient tongues adjacent one end projecting outwardly of the peripheral surface of the member with their free ends directed towards the opposite end of the member. Furthermore, parts of the wall of the tubular member being cut and bent to provide a second set of resilient tongues adjacent the opposite end of the member and projecting outwardly of the said peripheral surface with their free ends directed towards said one end of the member. The arrangement being such that when the tubular-like elements are assembled by sliding over opposite ends of the member, the free ends of the tongues will resiliently and frictionally engage the inner wall of the elements to resist removal. Since each tongue is flat, its side edges only engage, the inner walls of the elements causing on effortfull assembly and disassembly.

Furthermore, GB-A-2147680 discloses a joint for connecting tube or rod members comprising a connector engaged with a rod or tube which is preferably formed in continuous lengths by extrusion of, for example, a resiliently deformable thermoplastics material in a generally circular cross-section with one or more longitudinal ribs or flats. The connector has socket portions of complementary cross-section and is provided with one or more corresponding flats or ribs, so that the joint can be assembled relatively loosely with the respective flats and ribs aligned and tightened by a cam- or wedge-locking effect when the ribs are moved away from the flats upon rotation of the rod or tube in the socket.

Therefore, it is desireable to provide a post connector structure that is easy to manufacture, easy to assemble, and inexpensive, yet provides an invisible, strong connection between post segments.

### SUMMARY OF THE INVENTION

The present invention provides a post connector that overcomes many of the disadvantages of known connectors, such as those described above.

The connector of the present invention is characterized by the features of claim 1.

In its preferred embodiment, the present invention includes a connector sleeve for connecting together first and second posts. The sleeve has an outer surface dimensioned to slide tightly with a friction fit within the interior surface of both the first and second posts. A first flexible protrusion is formed at a mid-region of the sleeve and has a first interference or abutment surface adapted to abut an edge surface of the first post when the sleeve is inserted into the first post. This protrusion prevents the sleeve from being moved further or excessively into the first post. A second flexible protrusion is also formed in the mid-region of the sleeve and has a second interference or abutment surface adapted to abut an edge surface of the second post when the sleeve is inserted into the second post. Again the second protrusion prevents the sleeve from being moved further or excessively into the second post. The second interference surface is disposed substantially in the same radial plane as the first interference surface to cause the edge surfaces of the first and second posts to come into contact when the sleeve is assembled with them. When the first and second posts edge surfaces come together, the flexible protrusions may be moved out of abutting engagement with the post edge surfaces. Furthermore each of said first and second flexible protrusions has two side edge surfaces disposed substantially perpendicularly to each other.

In accordance with a further preferred embodiment of the present invention, a post connector for connecting together first and second posts includes a compressible insert adapted to be partially inserted into each of the first and second posts. The insert has a compression slot extending in the axial or longitudinal direction thereof to allow the insert to be compressed to provide a tight friction fit inside the first and second posts. First and second inclined protrusions extend from the outer surface of said insert and incline in opposite directions. Each protrusion has an abutment surface for abutting an engaging surface of a respective post. The abutment surfaces are substantially radially coplanar or slightly spaced away from each other relative to the radial plane to cause the engaging surfaces of the first and second posts to be adjacent each other with the insert substantially entirely within the posts and equally within the respective posts when the posts are connected together.

In accordance with still a further preferred embodiment of the present invention, a connector for coupling together first and second posts includes a bushing adapted to fit partially within the first post and partially within the second post, the bushing being compressible to provide a flush fit between it and each of the posts. First and second tabs are disposed on the bushing an engage respective end surfaces of the post. Each tab has a first position protruding from the outer surface of the bushing to engage one of the post end surfaces, and a second position substantially flush with the outer surface of the bushing. The tabs are biased toward their first position to cause the bushing to assume a predetermined positional relationship with respect to the posts when the posts are forced together. Forcing the posts together causes the tabs to be moved to their second positions.

Preferably, the interference or abutment surfaces of the protruding tabs are disposed approximately at the center of the bushing so that when the first and second posts are joined together, one half of the bushing extends into each of the posts. This configuration aids in the structural stability of the connector.

Also and preferably, the bushing is a one-piece hollow cylindrical piece of rolled steel, the tabs being integral therewith. The first and second posts may, in certain applications have annular rings on their interior surfaces to compress the bushing together and to provide a secure contact between the posts and the bushing.

According to a further preferred embodiment of the present invention, the first and second resilient tabs may be bent or fluted in cross section in order to facilitate their abutment with the contact surfaces of the hollow posts. Preferably, the fluted first and second tabs are flared in a direction away from the surface which contacts the hollow member. Also, the compression slot may extend axially and have two angled end portions that prevent parts from interlocking during the production and packaging.

The advantageous structure and functions according to the present invention will become apparent from the following detailed description of the preferred embodiments, when taken in conjunction with the accompanying drawings.

### BRIEF DESCRIPTION OF THE DRAWINGS

Figure 1 is a top view of a connector sleeve according to a preferred embodiment of the present invention.
Figure 2 is a cross-section of the connector sleeve shown in Figure 1 taken along plane 6-6 thereof.
Figure 3 is a side view of the preferred embodiment of the present invention.
Figure 4 is a end view of the embodiment shown in Figure 3.
Figure 5 is a close-up plan view of the fluted rectangular tab according to the preferred embodiment of the present invention.
Figure 6 is an end view of the fluted tab shown in Figure 5.

### DETAILED DESCRIPTION OF THE PREFERRED EMBODIMENT

The present invention will allow the connection of post segments in a nearly invisible manner while retaining substantially the same structural strength as the original post itself.

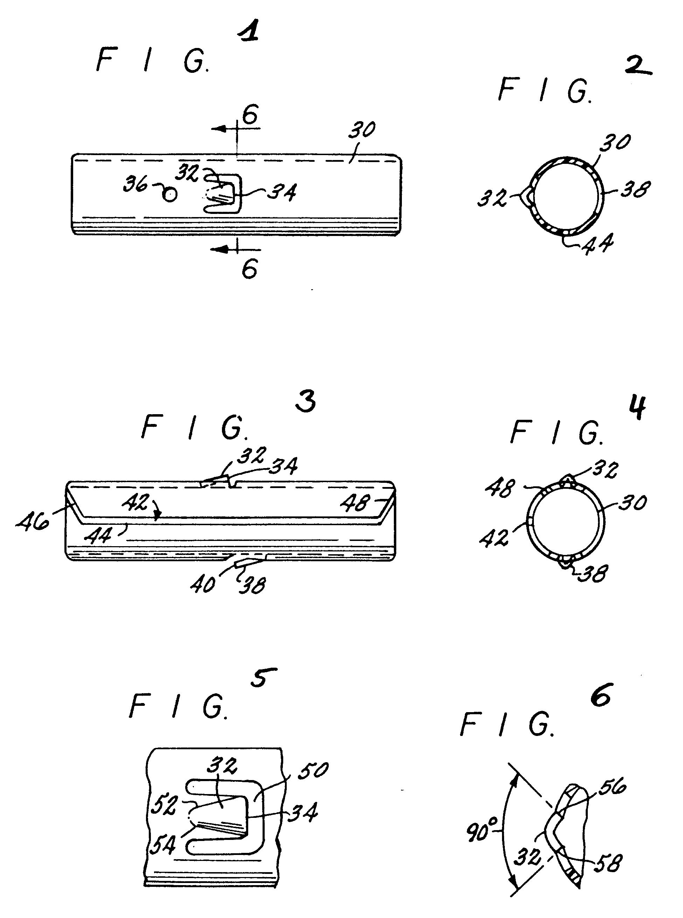

A preferred embodiment of the present invention will now be described with reference to Figures 1 through 6. This embodiment features a connector sleeve 30 having protrusion tabs, which are angled or fluted in cross-section, and a compression slot having angled end portions. In Figure 1, the sleeve 30 includes an angled or fluted protrusion tab 32. The Figure 3 shows an oppositely inclined protrusion tab 38 on the diametrically opposed side of the sleeve 30. Protrusion tabs 32 and 38 are bent toward the major surface of the sleeve adjacent the abutment ends 34 and 40 at an angle of approximately 90 degrees, with a vertex projecting away from the major sleeve surface (See Figure 6). The protrusion tabs 32 and 38 thus also have a flute-like shape that is flared open in a direction toward the abutment surfaces 34 and 40 as shown, for example, in the plan view of Figure 5.

The fluted protrusion tabs 32 and 38 provide additional advantages. First, since the abutment surfaces 34 and 40 are bent toward the major sleeve surface they present a rounded outer edge that contacts the inner surface of the hollow post (See Figure 6). This rounded edge enhances the movement of the protrusion tabs 32 and 38 inwardly since less surface area is available for interference contact with the contact surface of the hollow post. That is, for example, when the abutment surface 34 is in contact with the contact member of a first hollow post, movement of the second hollow post along the included surface of the protrusion tab 32 will push the protrusion tab 32 inward toward the interior of the sleeve 30. Since the edge of the protrusion tab 32 is rounded, it will more easily slide against the contact surface of the abutting first hollow post.

Still another advantage of this embodiment is that the fluted tabs have an effective thickness greater than the actual thickness of the material from which they are made and therefore the performance of the tab is less dependent on the angle at which it is bent from the outer surface of the sleeve. Furthermore, the tabs are less likely to collapse in an axial direction after they abut an engaging surface of one post.

Figure 1 depicts a hole 36 passing through to the interior of the sleeve 30. This hole 36 may be used as an identifier or to ease manufacturing and/or assembly steps of the resultant structures.

Figure 2 is a cross-sectional view of the embodiment shown in Figure 1 taken along plane 6-6 thereof. The fluted end of the protrusion tab 32 is clearly visible, while the generally flat inclined portion of the protrusion tab 38 is visible on the opposite side of the sleeve 30 from the tab 32.

Figure 3 is a side view of the sleeve of the embodiment shown in Figure 1. The fluted protrusion tabs 32 and 38 are clearly visible as being inclined in generally opposite directions and having their respective abutment surfaces 34 and 40 located in the same radial plane. Note that the protrusion tabs 32 and 38 extend above the outer surface of the sleeve 30 by a distance which is approximately equal to the thickness of the protrusion tabs. This choice of dimension is advantageous for the following reason. If the protrusion tabs 32 and 38 extend too far above the surface of the sleeve 30, the contact surface of a hollow member may be forced between the outer surface of the sleeve 30 and the protrusion tab itself, preventing assembly of the structure. Further, tabs which extend outward a great deal from the outer surface of the sleeve 30 will require a great force to compress them into the respective hollow members. However, if the tabs are not bent sufficiently outwardly from the major surface of the sleeve, they will not properly interfere with the respective contact surfaces of the posts.

In Figure 3, the compression slot 42 is depicted as extending generally axially along the sleeve 30. The compression slot 42 comprises the longitudinally-extending middle portion 44 and the angled end portions 46 and 48. The angled end portions 46 and 48 will prevent parts from interlocking during production and packaging. The portions 46 and 48 shown in Figure 1 are angled at approximately 60 degrees with the respect to the longitudinal axis of the sleeve 30. However, those of skill in this field will readily understand that this angle may be varied from one degree to 89 degrees, depending upon the size of the particular structure.

Figure 4 is an end view of the Figure 3 sleeve showing the fluted protrusion tabs 32 and 38. Furthermore, the compression slot 42 is shown substantially halfway between the protrusion tabs 32 and 38 relative to the circumference of the sleeve.

Figure 5 is an enlarged plan view of the protrusion tab 32. A U-shaped opening 50 bounds the protrusion tab 32. Lines 52 and 54 show that the protrusion tab 32 is flared inwardly from the abutment surface 34 toward the major surface of the sleeve to open outwardly in the opposite direction.

Figure 6 is an end view of the protrusion tab 32 viewed from the abutment surface 34. It can be seen that the outer edges 56 and 58 of the protrusion tab 32 form an angle of approximately 90 degrees so that the sides of the flute-like structure form an angle of approximately 90 degrees to define an arcuate apex. While this configurationons believed to be the most effective, the angle may be varied from 90 degrees.

The preferred material for the connector sleeve is metal, most preferably cold rolled steel. This material is very strong and also flexible and resilient. However, those of ordinary skill in this field understand that other materials, such as plastics, composites, and the like may be used depending upon the application for which the posts are designed.

Thus, what has been described is a light-weight, easy to manufacture, easy to assemble post connector capable of supporting great loads in a variety of applications. The present invention will find use in warehouses, stores, homes, or other places where assembly of the post segments to form extended supports is desireable.

## Claims

1. A connector for connecting together first and second hollow posts each having an end surface, said connector comprising:
a sleeve (30) dimensioned to fit inside both the first and second posts (2, 4);
a first flexible protrusion (32) formed in said sleeve (30) and having a first interference surface (34) adapted to abut the end surface (22) of the first post (2) when said sleeve (30) is inserted into the first post (2), said first protrusion (32) being fluted in cross-section adjacent said first interference surface (34); and
a second flexible protrusion (38) formed in said sleeve (30) and having a second interference surface (40) adapted to abut the end surface (24) of the second post (4) when said sleeve (30) is inserted into the second post (4), said second protrusion (16; 38) being fluted in crosssection adjacent said second interference surface (40), characterized in that
each of said first and second flexible protrusions has two side edge surfaces (56, 58) disposed substantially perpendicularly to each other.

2. A connector according to claim 1, wherein said first and second flexible protrusions (32, 38) extend in substantially opposite directions, are disposed on substantially opposite sides of said sleeve (30) and have said first and second interference surfaces (34, 40) disposed in substantially the same radial plane.

3. A connector according to claim 1 or 2, wherein said first and second flexible fluted protrusions (32, 38) flare inwardly away from the respective first and second interference surfaces associated therewith.

4. A connector according to any one of claims 1 to 3, wherein said sleeve (30) has a substantially circular cross section, and wherein said first and second flexible protrusions (32, 38) have arcuate cross sections.

5. A connector according to any one of claims 1 to 4, wherein each of said first and second flexible protrusions (32, 38) has a substantially rectangular shape.

6. A connector according to any one of claims 1 to 5, wherein each of the hollow posts (2, 4) has at least one ridge (6) formed on an inner surface thereof, and wherein said sleeve (30) has an outside dimension which is larger than an inside dimension of the ridges (6) but smaller than an inside dimension of the remaining portion of the hollow posts (2, 4).

7. A connector according to any one of claims 1 to 6, wherein said first and second flexible protrusions (32, 38) are disposed on opposite sides of said insert (30) and have substantially coplanar abutment surfaces (34, 40) which contact the contact surfaces (22, 24).

8. A connector according to any one of claims 1 to 7, wherein each of said first and second flexible protrusions (32, 38) extends above an outside surface of said sleeve (30) by a distance substantially equal to a thickness of the corresponding protrusion (32, 38).

9. A connector according to any one of claims 1 to 8, wherein said first and second flexible protrusions (32, 38) are each fluted inwardly at substantially ninety degrees in cross section at their respective contact surfaces (22, 24).

10. A connector according to any one of claims 1 to 9, wherein the sleeve (10; 30) comprises a generally axial slot (42).

## Patentansprüche

1. Verbinder zum Verbinden einer ersten und einer zweiten hohlen Stütze, die jeweils eine Endfläche aufweisen, wobei dieser Verbinder umfaßt
- eine Hülse (30), die so dimensioniert ist, daß sie in die erste Stütze (2) und die zweite Stütze (4) paßt,
- einen ersten biegsamen Vorsprung (32), der an der Hülse (30) gebildet ist und eine erste Stoßfläche (34) aufweist, die so ausgebildet ist, daß sie an der Endfläche (22) der ersten Stütze (2) anstößt, wenn die Hülse (30) in die erste Stütze (2) eingesetzt wird, wobei dieser erste Vorsprung (32) in der Nähe der ersten Stoßfläche (34) im Querschnitt rinnenförmig ist, sowie
- einen zweiten biegsamen Vorsprung (38), der an der Hülse (30) gebildet ist und eine zweite Stoßfläche (40) aufweist, die so ausgebildet ist, daß sie an der Endfläche (24) der zweiten Stütze (4) anstößt, wenn die Hülse (30) in die zweite Stütze (4) eingesetzt wird, wobei dieser zweite Vorsprung (38) in der Nähe der zweiten Stoßfläche (40) im Querschnitt rinnenförmig ist,
dadurch gekennzeichnet,
daß der erste und der zweite biegsame Vorsprung jeweils zwei Seitenflächen (56, 58) aufweisen, die im wesentlichen senkrecht zueinander angeordnet sind.

2. Verbinder nach Anspruch 1, bei dem der erste biegsame Vorsprung (32) und der zweite biegsame Vorsprung (38) in im wesentlichen entgegengesetzte Richtungen ragen und auf im wesentlichen gegenüberliegenden Seiten der Hülse (30) angeordnet sind, wobei die erste Stoßfläche (34) und die zweite Stoßfläche (40) im wesentlichen in der gleichen radialen Ebene liegen.

3. Verbinder nach Anspruch 1 oder 2, bei dem der erste biegsame rinnenförmige Vorsprung (32) und der zweite biegsame rinnenförmige Vorsprung (38) von der zugehörigen Stoßfläche aus nach innen abfallen.

4. Verbinder nach einem der Ansprüche 1 bis 3, bei dem die Hülse (30) einen im wesentlichen kreisförmigen Querschnitt aufweist und der erste biegsame Vorsprung (32) und der zweite biegsame Vorsprung (38) einen bogenförmigen Querschnitt haben.

5. Verbinder nach einem der Ansprüche 1 bis 4, bei dem der erste biegsame Vorsprung (32) und der zweite biegsame Vorsprung (38) eine im wesentlichen reckteckige Form haben.

6. Verbinder nach einem der Ansprüche 1 bis 5, bei dem auf der Innenseite der hohlen Stützen (2, 4) mindestens ein Flansch (6) gebildet ist, wobei die äußere Abmessung der Hülse (30) größer als die innere Abmessung der Flansche (6) aber kleiner als die innere Abmessung des übrigen Teils der hohlen Stützen (2, 4) ist.

7. Verbinder nach einem der Ansprüche 1 bis 6, bei dem der erste biegsame Vorsprung (32) und der zweite biegsame Vorsprung (38) auf gegenüberliegenden Seiten der Hülse (30) angeordnet sind und im wesentlichen koplanare Stoßflächen (34, 40) aufweisen, die an den Berührungsflächen (22, 24) anstoßen.

8. Verbinder nach einem der Ansprüche 1 bis 7, bei dem der erste biegsame Vorsprung (32) und der zweite biegsame Vorsprung (38) um eine Strecke, die im wesentlichen der Dicke des zugehörigen Vorsprungs (32, 38) entspricht, über die Außenfläche der Hülse (30) ragen.

9. Verbinder nach einem der Ansprüche 1 bis 8, bei dem der erste biegsame Vorsprung (32) und der zweite biegsame Vorsprung (38) innen so ausgekehlt sind, daß sie an ihren Berührungsflächen (22, 24) im Querschnitt einen Winkel von im wesentlichen 90° bilden.

10. Verbinder nach einem der Ansprüche 1 bis 9, bei dem die Hülse (30) einen im wesentlichen axialen Schlitz (42) umfaßt.

## Revendications

1. Connecteur destiné à connecter ensemble des premier et second montants creux ayant chacun une surface d'extrémité, ledit connecteur comportant :
un manchon (30) dimensionné pour entrer à l'intérieur à la fois du premier et du second montant (2, 4) ;
une première saillie flexible (32) formée dans ledit manchon (30) et ayant une première surface d'interférence (34) adaptée pour venir en butée contre la surface d'extrémité (22) du premier montant (2) lorsque ledit manchon (30) est inséré à l'intérieur du premier montant (2), ladite première saillie (32) étant profilée dans une coupe transversale adjacente à ladite première surface d'interférence (34) ; et
une seconde saillie flexible (38) formée dans ledit manchon (30) et ayant une seconde surface d'interférence (40) adaptée pour venir en butée contre la surface d'extrémité (24) du second montant (4) lorsque ledit manchon (30) est inséré à l'intérieur du second montant (4), ladite seconde saillie (38) étant profilée dans une coupe transversale adjacente à ladite seconde surface d'interférence (40), caractérisé en ce que
chacune desdites première et seconde saillies flexibles a deux surfaces formant bord latéral (56, 58) disposées sensiblement perpendiculairement l'une à l'autre.

2. Connecteur selon la revendication 1, dans lequel lesdites première et seconde saillies flexibles (32, 38) s'étendent dans des directions à peu près opposées, sont disposées sur des côtés à peu près opposés dudit manchon (30) et ont lesdites première et seconde surfaces d'interférence (34, 40) disposées sensiblement dans le même plan radial.

3. Connecteur selon la revendication 1 ou 2, dans lequel lesdites première et seconde saillies profilées flexibles (32, 38) s'évasent vers l'intérieur en s'éloignant des première et seconde surfaces d'interférence respectives associées à celles-ci.

4. Connecteur selon l'une quelconque des revendications 1 à 3, dans lequel ledit manchon (30) a une section transversale sensiblement circulaire et dans lequel lesdites première et seconde saillies flexibles (32, 38) ont des sections transversales en arc de cercle.

5. Connecteur selon l'une quelconque des revendications 1 à 4, dans lequel chacune desdites première et seconde saillies flexibles (32, 38) a une forme sensiblement rectangulaire.

6. Connecteur selon l'une quelconque des revendications 1 à 5, dans lequel chacun des montants creux (2, 4) a au moins un rebord (6) formé sur une surface intérieure de celui-ci, et dans lequel ledit manchon (30) a une dimension extérieure qui est plus importante qu'une dimension intérieure des rebords (6) mais plus petite qu'une dimension intérieure de la partie restante des montants creux (2, 4).

7. Connecteur selon l'une quelconque des revendications 1 à 6, dans lequel lesdites première et seconde saillies flexibles (32, 38) sont agencées sur des côtés opposés dudit insert (30) et ont des surfaces de butée sensiblement coplanaires (34, 40) qui viennent en contact avec les surfaces de contact (22, 24).

8. Connecteur selon l'une quelconque des revendications 1 à 7, dans lequel chacune desdites première et seconde saillies (32, 38) s'étend au-dessus d'une surface extérieure dudit manchon (30) sur une distance sensiblement égale à l'épaisseur de la saillie correspondante (32, 38).

9. Connecteur selon l'une quelconque des revendications 1 à 8, dans lequel lesdites première et seconde saillies flexibles (32, 38) sont chacune profilées vers l'intérieur selon sensiblement quatre vingt dix degrés en section transversale au niveau de leurs surfaces de contact respectives (22, 24).

10. Connecteur selon l'une quelconque des revendications 1 à 9, dans lequel le manchon (10 ; 30) comporte une fente de manière générale axiale (42).
